# EUROPÄISCHE PATENTSCHRIFT

(11) **EP 2 619 525 B1**
(45) Veröffentlichungstag und Bekanntmachung des Hinweises auf die Patenterteilung: **22.07.2015**
(21) Anmeldenummer: 11760456.1
(22) Anmeldetag: 16.09.2011
(51) Int. Cl.: G01B 11/02

(54) **VERFAHREN ZUM OPTISCHEN ANTASTEN EINER KANTE IN ODER AN EINEM OBERLÄCHENBEREICH**
METHOD FOR OPTICALLY SCANNING AN EDGE IN OR ON A SURFACE REGION
PROCÉDÉ DE PALPAGE OPTIQUE D'UN BORD DANS OU SUR UNE ZONE SUPERFICIELLE

(30) Priorität: 23.09.2010 DE 102010037746
(43) Veröffentlichungstag der Anmeldung: 31.07.2013
(73) Patentinhaber: Carl Mahr Holding GmbH, 37073 Göttingen (DE)
(72) Erfinder: NEHSE, Uwe, 98716 Geraberg (DE); BÜCHNER, Marco, 99085 Erfurt (DE)
(74) Vertreter: Rüger, Barthelt & Abel
(86) Internationale Anmeldenummer: PCT/EP2011/066135
(87) Internationale Veröffentlichungsnummer: WO 2012/038349

(56) Entgegenhaltungen:
- WO-A2-2010/003163
- DE-A1- 4 123 916
- DE-A1- 10 215 135
- US-A- 4 912 336
- US-A- 6 025 905

## Beschreibung

Die vorliegende Erfindung betrifft ein Verfahren zur optischen Messung oder Antastung einer Kante, die sich innerhalb eines Oberflächenbereichs befindet oder diesen begrenzt. Hierfür wird der interessierende Oberflächenbereich von einer Kamera aufgenommen, der zumindest zwei an die Kante angrenzende Teilflächen enthält. Anschließend kann auf Basis einer oder mehrerer Aufnahmen anhand wenigstens eines Kantenortkriteriums eine Bestimmung des Kantenorts erfolgen, um die Position der Kante zu ermitteln.

Ein Verfahren zur Kantenmessung ist beispielsweise aus der DE 102 15 135 A1 bekannt. Dort sollen Steuerinformationen für Einflussgrößen auf das Kamerabild automatisiert ermittelt werden, um ein optimales Messergebnis erreichen zu können. Aus den Informationen des Kamerabildes eines zu vermessenden Werkstücks werden Hilfsparameter gewonnen und aus diesen Hilfsparametern werden wiederum die Steuerinformationen abgeleitet. Zunächst werden Verläufe von mindestens zwei Hilfsparametern in Abhängigkeit von einer oder mehreren Einflussgrößen bestimmt. Als Hilfsparameter kann beispielsweise der Kontrast, die Homogenität, die Helligkeit und/oder der Anstieg dienen. Dabei werden die Verläufe so bestimmt, dass entweder alle Verläufe im Optimum ein Maximum oder ein Minimum aufweisen. Anschließend erfolgt eine gewichtete Summation der Einzelverläufe der Hilfsparameter zu einem Gesamtverlauf. Die Wichtungsfaktoren können beispielsweise experimentell ermittelt werden. Schließlich wird am Ort des Extremums des Gesamtverlaufs der Wert der Einflussgröße als Steuerinformation für die Einflussgröße bestimmt. Auf diese Weise kann die Messeinstellung für die Aufnahme des Kamerabildes und damit für die Ermittlung der Kante optimiert werden. Für die Kantenbestimmung können auch mehrere verschiedene Kantenortsriterien, beispielsweise ein Schwellwertkriterium und ein differentielles Kriterium, gewichtet addiert werden, um die Lagebestimmung der Kante zu verbessern.

Aus DE 102 37 426 A1 ist ferner ein Durchlichtverfahren zum Vermessen von Werkzeugen bekannt. Dabei wird die Erfassungscharakteristik der Kamera in Abhängigkeit eines Steuerkriteriums mit dem Ziel einer Optimierung der Erfassungscharakteristik gesteuert, um die Kontur des Werkzeugs im Durchlicht exakt bestimmen zu können. Es werden beispielsweise die Belichtungszeit, die Signalverstärkung des Bildverarbeitungssensors und/oder des Sensoroffsets verändert. Die Steuerkriterien werden abgeleitet aus einem Vergleich mit Soll-Grauwertprofilen für die Werkzeugkontur.

In DE 10 2007 003 060 A1 wird vorgeschlagen, die Güte eines Messpunktes bei der Kantendetektion zu bestimmen. Die Pixelwerte werden anhand einer Gütefunktion aus dem Verlauf der Grauwerte entlang von Messlinien bewertet. Über die Güte wird der Grauwertverlauf gewichtet und zur Berechnung des Kantenortes verwendet.

Ein Verfahren und eine Vorrichtung zur Analyse zumindest partiell reflektierender Oberflächen ist in DE 10 2004 033 526 A1 beschrieben. Der Kern dieses Verfahrens liegt darin, Oberflächen- und Formuntersuchung des Messobjekts unter Ausnutzung der Bewegung von Komponenten der Anordnung durchzuführen. Dabei wird der Effekt ausgenutzt, dass sich ein von der Objektoberfläche reflektiertes Muster ändert, wenn die Relativposition oder die Orientierung der Kamera gegenüber der Objektoberfläche geändert wird. Diese Musteränderung kann in einer Steuereinheit ausgewertet werden.

US 49 12 336 beschreibt außerdem eine Vorrichtung, die zur Erfassung der Oberflächenform dient. Dabei werden punktförmige Lichtquellen sequenziell aktiviert und jeweils ein Bild des von der Objektoberfläche reflektierten Lichts aufgenommen. Die Vorrichtung soll dazu dienen, für unterschiedliche Reflexionseigenschaften der Oberfläche geeignet zu sein. Sowohl für Oberflächen, die eine spiegelartige gerichtete Reflexion, als auch für Oberflächen mit diffusen Reflexionseigenschaften, sowie hybride Flächen soll das Verfahren geeignet sein. Über einen Extraktionsalgorithmus werden die Komponenten der gerichteten von den Komponenten der diffusen Reflexion für jede gemessene Bildintensität getrennt, um daraus die Oberflächenausrichtung berechnen zu können.

Eine Vorrichtung zur Prüfung von Oberflächenstrukturen ist aus WO 2010/003163 A2 bekannt. Dort wird ein Oberflächenbereich mit Hilfe von Leuchtsegmenten einer Beleuchtungseinrichtung aus unterschiedlichen Richtungen beleuchtet. Bei jeder Beleuchtung aus einer anderen Richtung wird ein Bild aufgenommen. Diese Bilder werden zur Weiterverarbeitung bereitgestellt.

Bisher ist die genaue Erkennung der Lage einer Kante im Kamerabild trotz verschiedener Optimierungen, zum Beispiel bei Steuergrößen schwierig. Häufig werden deswegen in der Bildverarbeitung auch Filter auf die aufgenommenen Bilder angewandt, um das Ergebnis bei der optischen Antastung der Kante zu verbessern.

Ausgehend vom genannten Stand der Technik kann es als eine Aufgabe der vorliegenden Erfindung angesehen werden, ein sehr einfaches Verfahren zu schaffen, das eine subpixelgenaue Bestimmung der Lage einer Kante durch optisches Antasten gestattet.

Diese Aufgabe wird durch das Verfahren mit den Merkmalen des Patentanspruches 1 sowie durch das Verfahren mit den Merkmalen des Patentanspruches 12 gelöst.

Der Kern des Verfahrens ist darin zu sehen, die Reflektanz des interessierenden Objektoberflächenbereichs pixelgenau zu ermitteln und daraus die Kante mit wenigstens einem bekannten Kantenortkriterium optisch anzutasten. Dafür wird der Oberflächenbereich nacheinander in verschiedenen Beleuchtungszuständen, beispielsweise mit voneinander verschiedenen Gruppen von Lichtquellen oder aus verschiedenen Beleuchtungsrichtungen angestrahlt und in jedem Beleuchtungszustand wird eine Sequenz mehrerer Kamerabilder aufgenommen. Dies kann beispielsweise durch eine Beleuchtungseinrichtung mit mehreren Lichtquellen erfolgen, wobei jeweils nur eine oder eine ausgewählte Gruppe von Lichtquellen für die Intensitätsänderung verwendet wird. Eine Lichtquelle kann mehreren Gruppen zugeordnet sein. Es existieren aber keine zwei identischen Gruppen. Alternativ hierzu könnte auch zumindest eine positionierbare, bewegbare Lichtquelle vorgesehen werden, deren Position immer wieder verändert wird. Während der Beleuchtung aus einer Beleuchtungsrichtung wird eine Sequenz mit mehreren Bildern aufgenommen. Für jede Beleuchtung des Objektoberflächenbereichs aus einer gewählten Beleuchtungsrichtung entsteht auf diese Weise eine Sequenz bzw. ein Stapel mit mehreren Kamerabildern. Jedes Kamerabild einer Sequenz wird bei einer anderen Beleuchtungsintensität aufgenommen. Beispielsweise wird die Beleuchtungsintensität von Kamerabild zu Kamerabild stufenweise erhöht. Insbesondere ist die Beleuchtungsintensitätsdifferenz zwischen den Kamerabildern einer Sequenz identisch. Bevorzugt bleibt die Relativposition zwischen der Kamera und der Objektoberfläche während der Aufnahme der Sequenzen unverändert.

Anhand der Kamerabilder jeder Sequenz wird ein ortsaufgelöstes höchstens pixelgenaues Reflektanzbild ermittelt. Dies geschieht insbesondere dadurch, dass auf Basis der Kamerabilder der Sequenz für jedes Pixel ein Verlauf einer Lichtmengengröße abhängig von der Beleuchtungsintensität bestimmt wird. Die Lichtmengengröße beschreibt die von der Kamera empfangene Lichtmenge für das jeweils zugeordnete Pixel. Als Wert der Lichtmengengröße dient beispielsweise der Grauwert eines Pixels.

Vorzugsweise werden nur die Werte der Lichtmengengröße zur Bildung des intensitätsabhängigen Verlaufs herangezogen, die zumindest ein vorgegebenes Auswahlkriterium erfüllen. Als Auswahlkriterium kann insbesondere eine oder mehrere der folgenden Bedingungen verwendet werden:
- die Werte der Lichtmengengröße unterhalb eines Intensitätsminimalwertes für die Beleuchtungsintensität entsprechen höchstens einem Lichtmengenminimalwert;
- die Werte der Lichtmengengröße oberhalb eines Intensitätsmaximalwertes für die Beleuchtungsintensität entsprechen zumindest einem Lichtmengenmaximalwert;
- von einem Intensitätsminimalwert bis zu einem Intensitätsmaximalwert für die Beleuchtungsintensität nehmen die Werte der Lichtmengengröße zu.

Durch das wenigstens eine Auswahlkriterium können ungültige Werte für die Lichtmengengröße unberücksichtigt bleiben. Beispielsweise kann es durch Überstrahlung eines Pixels zu falschen Werten für die Lichtmengengröße für dieses und benachbarte Pixel kommen. Derart ungültige Werte der Lichtmengengröße werden für die Bestimmung des Verlaufs der Lichtmengengröße für die betreffende Pixel weggelassen. Dies kann dazu führen, dass für die verschiedenen Pixel Werte der Lichtmengengröße von unterschiedlichen Bildern derselben Sequenz unberücksichtigt bleiben. Der intensitätsabhängige Verlauf der Lichtmengengröße - zum Beispiel dessen Steigung im linear ansteigenden Bereich - beschreibt die Reflektanz für das betreffende Pixel. Aus den Reflektanzen aller Pixel ergibt sich das Reflektanzbild.

Schließlich wird zumindest eines der Reflektanzbilder der aufgenommenen Sequenzen dazu verwendet, ein Ergebnisreflektanzbild zu ermitteln. Das Ergebnisreflektanzbild kann vorzugsweise durch eine gewichtete Addition der Reflektanzen der örtlich übereinstimmenden Pixel aus den Reflektanzbildern gebildet werden. Die Wichtungsfaktoren können dabei auch gleich null sein, so dass einzelne Reflektanzbilder bei der Berechnung des Ergebnisreflektanzbildes unberücksichtigt bleiben. Der Wichtungsfaktor von größer oder gleich null, kann sich bevorzugt aus einem Vergleich von örtlichen Reflektanzänderungen der Reflektanzbilder ergeben. Dadurch soll eine konstruktive Überlagerung für die beiden die Kante begrenzenden Teilflächen des Objektoberflächenbereichs sichergestellt und eine destruktive Überlagerung verhindert werden. Bei diesem Vergleich kann zum Beispiel die ortsabhängige Änderung der Reflektanz in einem betrachteten Bildsegment verglichen werden. Reflektanzbilder mit sich ortsabhängig gleich oder innerhalb eines vorgegebenen Toleranzbereichs ähnlich änderenden Reflektanzen werden bei der Bestimmung des Ergebnisreflektanzbildes berücksichtigt. Zum Beispiel bleibt eines der Refelktanzbilder unberücksichtigt, dessen Reflektanz sich in einem Bildsegment von Pixel zu Pixel in eine Richtung abnehmen oder im Wesentlichen gleich bleiben, während die Werte der Reflektanzen im örtlich entsprechenden Bildsegment bei allen anderen Reflektanzbildern in dieselbe Richtung von Pixel zu Pixel zunehmen. Den nicht zu berücksichtigenden Reflektanzbildern kann für die gewichtete Addition der Wichtungsfaktor null zugeordnet werden.

Es ist auch von Vorteil, wenn zumindest ein Teil der ermittelten Wichtungsfaktoren dem aktuell vermessenen Objekt oder Oberflächenbereich oder Typ des Objekts bzw. des Objektoberflächenbereichs zugeordnet und abgespeichert wird. Die Eigenschaften der Reflektanzbilder sind bezüglich in etwa gleich orientierten Oberflächenbereichen im Wesentlichen gleich. Dieses Wissen kann später bei der Kantenmessung von Objekten oder Objektoberflächenbereichen gleichen Typs wiederverwendet werden, beispielsweise wenn wiederholt Kantenmessung an gleichartigen oder identischen Werkzeugen oder Werkstücken durchgeführt werden. Sequenzen von Kamerabildern, die aufgrund des Beleuchtungszustands zu keinem verwendbaren Reflektanzbild geführt haben, brauchen dann nicht erneut aufgenommen werden. Es genügt bei späteren Kantenmessungen an Objekten oder Objektoberflächenbereichen gleichen Typs dann die Sequenzen aufzunehmen, deren Reflektanzbilder bei der Bestimmung des Ergebnisreflektanzbildes verwendet wurden, denen also zum Beispiel ein Wichtungsfaktor größer als null zugeordnet wurde. Beispielsweise kann auch ein Mindestwichtungsfaktor vorgegeben werden und für spätere Kantenmessungen bei gleichen Objekttypen werden dann lediglich die Sequenzen aufgenommen, deren Reflektanzbild bei anderen Messungen zuvor einen Wichtungsfaktor erhalten hatte, der zumindest dem Mindestwichtungsfaktor entspricht. Derartige Maßnahmen können die nötige Messdauer erheblich senken.

Das so erhaltene Ergebnisreflektanzbild dient schließlich dazu, die Kante im oder am Objektoberflächenbereich mit wenigstens einem an sich bekannten Kantenortkriterien entlang von Messlinien zu bestimmen. Da für die Bestimmung des Kantenverlaufs wesentlich mehr Daten zur Verfügung stehen, als notwendig wären, liegt bei der Bestimmung der Kante nach dem erfindungsgemäßen Verfahren ein überbestimmtes Problem vor, so dass die Genauigkeit bei der Bestimmung der Lage der Kante größer ist als bei der Bestimmung aus dem Kamerabild. Das Erzeugen eines Reflektanzbildes bei der Ermittlung einer Kante bietet den Vorteil, dass auch Kanten exakt bestimmt werden können, die sich lediglich durch zwei unterschiedlich orientierte Flächenabschnitte bilden, deren Oberflächeneigenschaften jedoch nicht unterscheidbar sind. Lokale Schwankungen der Konturschärfe, zum Beispiel wegen makroskopischer Bearbeitungsspuren, führen zu keiner ungenauen Kantenbestimmung. Das Verfahren ist robust und erfordert wenig Rechenkapazität. Es eignet sich insbesondere zur optischen Antastung von Werkstücken, beispielsweise Werkzeugen im Auflicht.

Vorteilhafte Ausgestaltungen des erfindungsgemäßen Verfahrens ergeben sich aus den abhängigen Patentansprüchen sowie der Beschreibung. Die Beschreibung beschränkt sich auf wesentliche Merkmale eines Ausführungsbeispiels sowie sonstiger Gegebenheiten. Die Zeichnung ist ergänzend heranzuziehen. Es zeigen:
Figur 1 eine Vorrichtung zur Durchführung des erfindungsgemäßen Verfahrens in schematischer Darstellung nach Art eines Blockschaltbilds,
Figur 2 eine Beleuchtungseinrichtung mit mehreren Lichtquellen in schematischer, blockschaltbildähnlicher Darstellung,
Figur 3 die schematisierte Darstellung eines aufgenommenen Kamerabildes mit mehreren Pixeln,
Figur 4 die schematische Darstellung der Ermittlung von Reflektanzbildern sowie des Ergebnisreflektanzbildes,
Figur 5 eine schematische Darstellung der Auswahl von Reflektanzbildern für die Ermittlung des Ergebnisreflektanzbildes,
Figuren 6 und 7 beispielhafte schematische Darstellungen für ein neutrales Verhalten bei der Addition von Reflektanzbildern
Figur 8 eine beispielhafte schematische Darstellung von Grauwertverläufen abhängig von der Beleuchtungsintensität der Lichtquelle und
Figur 9 ein Flussdiagramm eines Ausführungsbeispiels des erfindungsgemäßen Verfahrens.

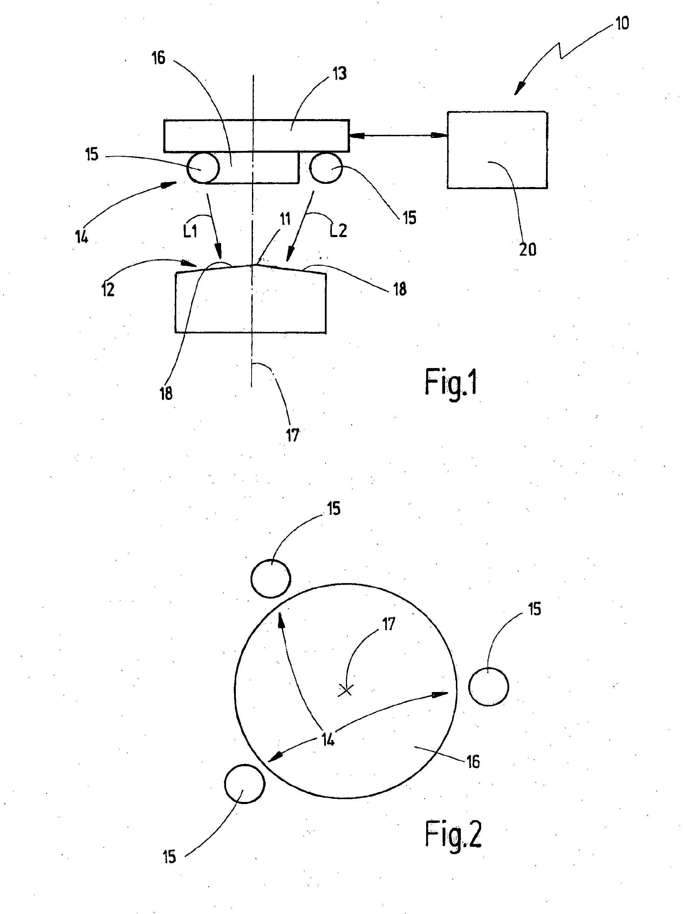

In den Figuren 1 und 2 ist eine Vorrichtung 10 zum optischen Antasten einer Kante 11 eines Objektoberflächenbereichs 12 eines Objekts 9 dargestellt. Im Objektoberflächenbereich 12 grenzen beispielsgemäß zwei Teilflächen 18 an die zu ermittelnde Kante 11 an.

Die Vorrichtung 10 weist eine Kamera 13, vorzugsweise eine Matrix-Kamera auf. Außerdem enthält die Vorrichtung 10 eine Beleuchtungseinrichtung 14, mit einer Vielzahl von Lichtquellen 15. Bei dem hier beschriebenen Ausführungsbeispiel sind die Lichtquellen 15 verteilt um das Objektiv 16 der Kamera 13 oder dessen optische Achse 17 angeordnet. Der Abstand der Lichtquellen 15 zur optischen Achse 17 kann gleich groß sein.

Über eine Steuereinrichtung 20 wird sowohl die Kamera 13, als auch die Beleuchtungseinrichtung 14 angesteuert. Die Steuereinrichtung 20 kann die Kameraeinstellungen, wie etwa die Fokuslage, die Belichtungszeit, die Blende einstellen. Außerdem steuert die Steuereinrichtung 20 die Beleuchtungseinrichtung 14 an. Sie wählt die für den aktuellen Beleuchtungszustand zur Änderung der Beleuchtungsintensität I zu verwendende Lichtquelle 15 oder Gruppe von Lichtquellen 15 aus und stellt die Beleuchtungsintensität I der Lichtquelle 15 oder der Lichtquellen 15 für das jeweils durch die Kamera 13 aufzunehmende Kamerabild B ein. Durch Verwendung unterschiedlicher Lichtquellen 15 oder Gruppen von Lichtquellen 15 der Beleuchtungseinrichtung 14 kann die Beleuchtungsrichtung L1, L2 verändert werden, aus der der Objektoberflächenbereich 12 angestrahlt wird, wobei der Objektoberflächenbereich 12 auch aus mehreren unterschiedlichen Beleuchtungsrichtungen L1, L2 gleichzeitig angestrahlt werden kann. Die Beleuchtungsrichtung L1, L2 ist beim Ausführungsbeispiel durch die Position der Lichtquelle 15 oder der Gruppe von Lichtquellen 15 in Umfangsrichtung um die optische Achse 17 gesehen bestimmt. In der Beleuchtungsrichtung L1, L2 fällt das Licht auf den interessierenden Objektoberflächenbereich 12 ein.

Zur Änderung der Beleuchtungsrichtung L1, L2 wäre es alternativ zu dem hier beschriebenen Ausführungsbeispiel auch möglich, die Position einer Lichtquelle 15 relativ zur optischen Achse 17 zu verändern. Beispielsweise könnte eine Lichtquelle 15 um die optische Achse 17 herum bewegbar angeordnet sein.

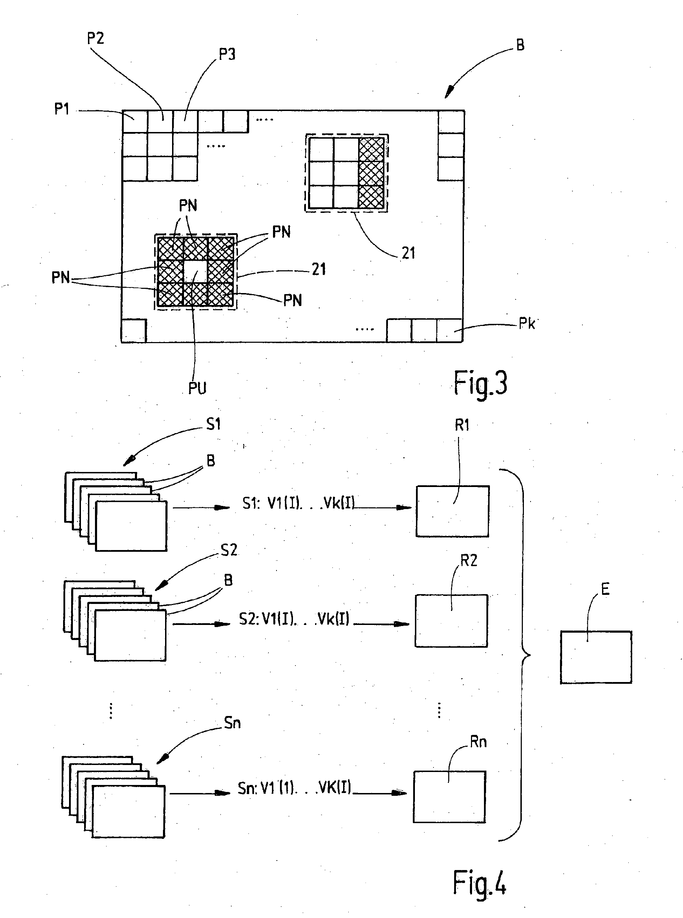

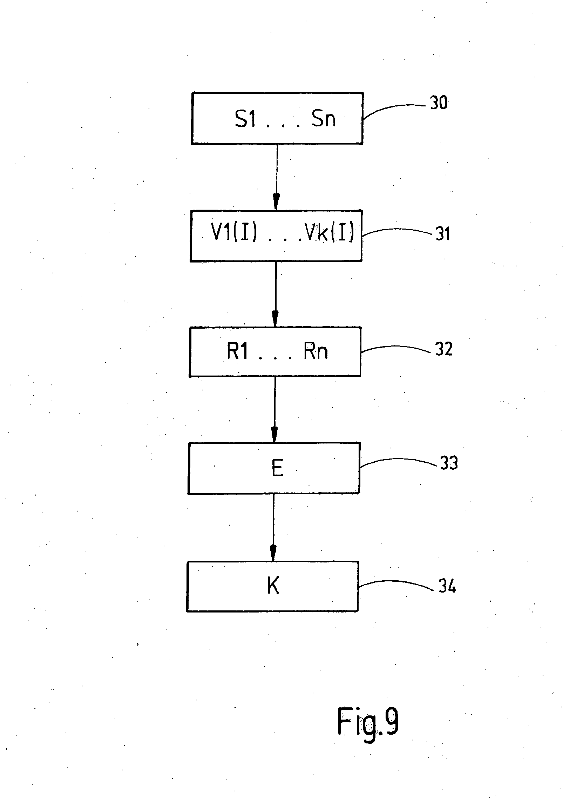

Anhand der Figuren 3 bis 9 wird nachfolgend ein Ausführungsbeispiel für ein erfindungsgemäßes Verfahren zur Ermittlung der Länge und/oder des Verlaufs und/oder der Lage einer Kante 11 in oder an dem Objektoberflächenbereich beschrieben.

In einem ersten Verfahrensschritt 30 wird durch die Steuereinrichtung 20 gesteuert wenigstens eine Sequenz mit jeweils mehreren Kamerabildern B aufgenommen. Für die erste Sequenz S1 aus mehreren Bildern B wird eine erste Lichtquelle 15 oder eine erste Gruppe von Lichtquellen 15 der Beleuchtungseinrichtung 14 zur intensitätsvariablen Beleuchtung verwendet. Der Objektoberflächenbereich 12 wird aus einer oder mehreren Beleuchtungsrichtungen L1, L2 angestrahlt, wodurch ein erster Beleuchtungszustand vorgegeben ist. Für jedes aufgenommene Kamerabild B dieser ersten Sequenz S1 wird die Intensität I des auf den interessierenden Objektoberflächenbereich 12 abgestrahlten Lichts verändert. Hierfür wird die dazu vorgesehene erste Lichtquelle 15 oder erste Gruppe von Lichtquellen 15 durch die Steuereinrichtung 20 entsprechend angesteuert. Die Intensität I wird beispielsweise schrittweise mit konstanten Schrittgrößen vergrößert oder verkleinert und für jeden Intensitätswert wird ein Kamerabild B aufgenommen.

Nach der Aufnahme der ersten Sequenz S1 werden gegebenenfalls weitere Sequenzen S2 bis Sn aufgenommen. Für die Aufnahme jeder Sequenz S1 bis Sn wird der Beleuchtungszustand verändert. Beim Ausführungsbeispiel wird hierfür für jede Sequenz S1 bis Sn eine andere Lichtquelle 15 oder eine andere Gruppe von Lichtquellen 15 der Beleuchtungseinrichtung 14 zum Anstrahlen des Objektoberflächenbereichs 12 verwendet.

Alternativ zum bevorzugten Ausführungsbeispiel besteht auch die Möglichkeit eine bewegbare Lichtquelle 15 einzusetzen und die Position der Lichtquelle 15 in den verschiedenen Beleuchtungszuständen zu verändern.

In einem oder mehreren Beleuchtungszuständen kann der Objektoberflächenbereich 12 mit farbigem Licht angestrahlt werden. Zumindest eine der Lichtquellen 15 der Beleuchtungseinrichtung 14 kann farbiges Licht abstrahlen. Es ist auch möglich, über einen Teil der Lichtquellen 15 bei allen Sequenzen eine Grundhelligkeit zu erzeugen, um die Helligkeitsänderung durch die intensitätsvariable Lichtquelle 15 oder intensitätsvariable Gruppe von Lichtquellen 15 in den verschiedenen Beleuchtungszuständen ausgehend von der Grundhelligkeit an den Arbeitspunkt der Kamera 13 anzupassen.

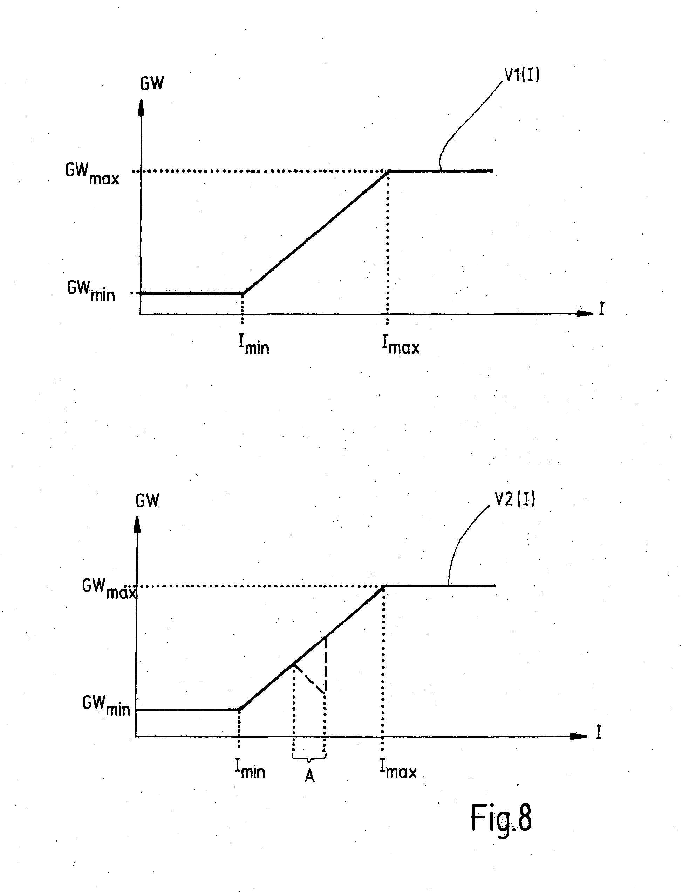

Nachdem die gewünschte Anzahl der Sequenzen S1 bis Sn aufgenommen wurde, wird bei dem hier beschriebenen Ausführungsbeispiel in einem zweiten Verfahrensschritt 31 lokal für jedes Pixel P1 bis Pk anhand der Kamerabilder B einer Sequenz S1 bis Sn ein Verlauf V1 bis Vk für die vom Objektoberflächenbereich 12 reflektierte und von der Kamera 13 empfangene Lichtmenge ermittelt. Entsprechend der Auflösung der Kamera 13 entstehen somit abhängig von der Anzahl k der verfügbaren Pixel P eine entsprechende Anzahl von intensitätsabhängigen Verläufen V1 (I) bis Vk(I) pro Sequenz S1 bis Sn. Beispielsgemäß werden durch die Kamera 13 Grauwerte GW intensitätsabhängig erfasst, so dass für jedes Pixel P1 bis Pk einer Sequenz S1 bis Sn ein intensitätsabhängiger Grauwertverlauf V1 (I) bis Vk(I) ermittelt wird. Beispielhafte intensitätsabhängige Grauwertverläufe V1(I), V2(I) sind in Figur 8 dargestellt. Die intensitätsabhängigen Grauwertverläufe V1(I) bis Vk(I) werden abhängig von der Beleuchtungsintensität I bestimmt.

Für die Bestimmung der intensitätsabhängigen Grauwertverläufe V1(I) bis Vk(I) der Pixel P1 bis Pk werden jeweils nur die Grauwerte GW eines Kamerabildes B herangezogen, die zumindest ein vorgegebenes Auswahlkriterium erfüllen. Dabei können zum Beispiel die Steigung des intensitätsabhängigen Grauwertverlaufs V1(I) bis Vk(I) und/oder die Werte des intensitätsabhängigen Grauwertverlaufs V1(I) bis Vk(I) unterhalb eines Intensitätsminimalwerts Iₘᵢₙ und/oder oberhalb eines Intensitätsmaximalwerts Iₘₐₓ ausgewertet werden. Als Auswahlkriterium wird beim Ausführungsbeispiel wenigstens eines der folgenden Kriterien auf Richtigkeit überprüft:
- die Grauwerte GW unterhalb des Intensitätsminimalwertes Iₘᵢₙ für die Beleuchtungsintensität entsprechen höchstens einem Grauwertminimum GWₘᵢₙ;
- die Grauwerte GW oberhalb des Intensitätsmaximalwertes Iₘₐₓ für die Beleuchtungsintensität entsprechen zumindest einem Grauwertmaximum GWₘₐₓ;
- zwischen dem Intensitätsminimalwert Iₘᵢₙ und dem Intensitätsmaximalwert Iₘₐₓ für die Beleuchtungsintensität ist die Steigung des intensitätsabhängigen Grauwertverlaufs V1 (I) bis Vk(I) größer als null, insbesondere in etwa konstant und liegt vorzugsweise innerhalb eines vorgegebenen Toleranzbereichs.

Diese Auswahlkriterien sind anhand von Figur 8 veranschaulicht. Während der erste intensitätsabhängige Grauwertverlauf V1(I) den Auswahlkriterien entspricht, würde sich im zweite intensitätsabhängigen Grauwertverlauf V2(I) in einem Bereich A eine negative Steigung ergeben, wenn alle Kamerabilder B dieser Sequenz S und damit alle verfügbaren Grauwerte GW dieses Pixels bei der Ermittlung des zweiten Grauwertverlaufs V2(I) herangezogen würden. Im Bereich A ist dies gestrichelt dargestellt. Unter Anwendung des Auswahlkriteriums, dass in diesem Bereich eine positive und im Wesentlichen konstante Steigung des intensitätsabhängigen Grauwertverlaufs V2(I) vorliegen muss, bleiben die Grauwerte GW unberücksichtigt, die dazu führen würden, dass dieses Auswahlkriterium nicht erfüllt wird. Es ergibt sich deshalb der mit durchgezogenen Linien dargestellte zweite intensitätsabhängige Grauwertverlauf V2(I).

Der intensitätsabhängige Grauwertverlauf V1(I) bis Vk(I) und insbesondere dessen ansteigenden Bereich kann für jedes Pixel P1 bis Pk an den Arbeitspunkt der Kamera 13 angepasst werden. Zur Verbesserung dieser Anpassung kann auch die Grundhelligkeit verändert werden, zum Beispiel indem ein Teil der Lichtquellen 15 der Beleuchtungseinrichtung 14 die gewünschte Grundhelligkeit liefert. Das Grauwertminimum GWₘᵢₙ und/oder das Grauwertmaximum GWₘₐₓ können über die Grundhelligkeit verschoben werden.

Alternativ oder zusätzlich kann zum Beispiel auch die örtliche oder lokale Änderung von Grauwerten GW innerhalb eines zusammenhängenden Bildsegments 21 eines Kamerabildes B als Auswahlkriterium dienen. Dabei kann die örtliche Grauwertänderung im Bildsegment 21 mit vorgegebenen Grenzwerten verglichen werden. Es ist auch möglich, die örtlichen Grauwertverläufe der örtlich übereinstimmenden Bildsegmente 21 in den verschiedenen Kamerabildern B miteinander zu vergleichen. Dabei kann eine Mehrheitsentscheidung gefällt werden. Beispielhaft sei angenommen, dass in der Mehrheit der Kamerabilder B einer Sequenz S der örtliche Grauwertverlauf im jeweils örtlich übereinstimmenden Bildsegment 21 von links nach rechts zunimmt, wie in Figur 3 schematisch veranschaulicht. Existiert nun ein Kamerabild B oder mehrere Kamerabilder B, bei denen dies nicht der Fall ist, beispielsweise weil der örtliche Grauwertverlauf im Bildsegment 21 im Wesentlichen konstant ist oder sogar von links nach rechts abnimmt, dann bleiben für die Pixel P dieses Bildsegments 21 die in diesen Kamerabildern B erfassten Grauwerten bei der Bestimmung des intensitätsabhängigen Grauwertverlaufs V(I) außer Betracht. Der örtliche Grauwertverlauf im betrachteten Bildsegment 21, der in der Mehrzahl der Kamerabilder einer Sequenz S übereinstimmt wird mithin als korrekt betrachtet. Davon abweichende örtliche Grauwertverläufe werden als fehlerhaft eingestuft.

Zu derartigen Abweichungen im örtlichen Grauwertverlauf kann es beispielsweise durch den Effekt der Überstrahlung eines Pixels kommen. Dies führt zu fehlerhaften Grauwerten bei diesem Pixel. Wegen des Übersprechens und der Punktspreizfunktion der Kamera können auch alle unmittelbar benachbarten Pixel betroffen sein. Die Überstrahlung eines Pixels PU kann beispielsweise durch Bearbeitungsspuren im Objektoberflächenbereich 12 hervorgerufen werden. Das Erkennen der Überstrahlung eines Pixels PU kann erkannt werden. Bei dem überstrahlten Pixel PU ist der Betrag für das Grauwertminimum GWₘᵢₙ und/oder das Grauwertmaximum GWₘₐₓ erkennbar größer als bei den unmittelbar benachbarten Pixeln PN (Figur 3). Wird in einem Bildsegment 21 diese Situation erkannt, so bleiben für das überstrahle Pixel PU sowie für die benachbarten Pixel PN dieses Bildsegments 21 die in diesem Kamerabild B erfassten Grauwerte bei der Bestimmung des intensitätsabhängigen Grauwertverlaufs V(I) außer Betracht.

In einem anschließenden dritten Verfahrensschritt 32 wird aus den für jedes Pixel P1 bis Pk aus den intensitätsabhängigen Grauwertverläufen V1(I) bis Vk(I) die Reflektanz für das jeweils entsprechende Pixel P1 bis Pk ermittelt und aus den Reflektanzen der k Pixel P1 bis Pk ein Reflektanzbild R1 bis Rn für jede Sequenz S1 bis Sn ermittelt, wie dies schematisch in Figur 4 veranschaulicht ist. Als Reflektanz kann beispielsweise die Steigung des intensitätsabhängigen Grauwertverlaufs V1(I) bis Vk(I) des betreffenden Pixels P1 bis Pk oder ein anderer den intensitätsabhängigen Grauwertverlauf im Bereich seines linearen Anstiegs charakterisierender Parameter dienen.

Prinzipiell kann es ausreichen, lediglich eine Sequenz S1 und ein Reflektanzbild R1 zu erzeugen, um daraus nachfolgend die Lage der Kante 11 zu ermitteln. Vorzugsweise werden jedoch eine Vielzahl von Sequenzen S1 bis Sn aufgenommen, so dass eine entsprechende Anzahl von Reflektanzbildern R1 bis Rn zur Verfügung steht.

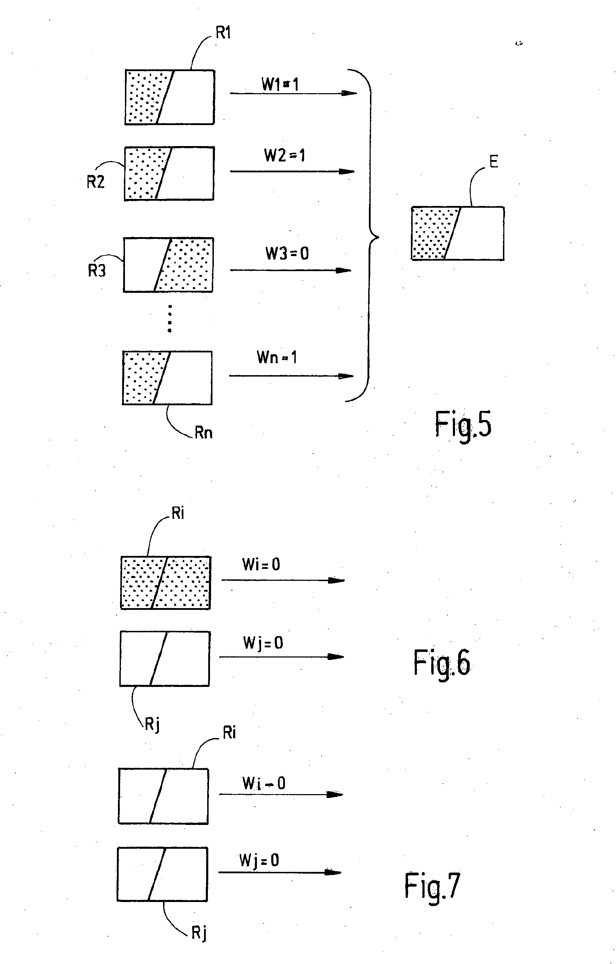

In einem vierten Verfahrensschritt 33 werden die einzelnen Reflektanzbilder R1 bis Rn zu einem gemeinsamen Ergebnisreflektanzbild E verknüpft. Dies geschieht vorzugsweise durch eine gewichtete Addition der Reflektanzbilder R1 bis Rn. Beispielhaft ist diese gewichtete Addition in Figur 5 dargestellt. Die Wichtungsfaktoren W1 bis Wn der einzelnen Reflektanzbilder R1 bis Rn können gleich null oder größer als null sein. Ist einer der Wichtungsfaktoren W1 bis Wn gleich null, so wird das betreffende Reflektanzbild bei der Ermittlung der Ergebnisreflektanzbildes E nicht berücksichtigt, wie dies am Beispiel des dritten Reflektanzbildes R3 veranschaulicht ist. Dies kann deswegen notwendig sein, weil beispielsweise abhängig von den Materialeigenschaften des Objektoberflächenbereichs 12 gegenläufige Reflektanzen auftreten können. Diese würden sich bei einer Addition gegenseitig aufheben oder zumindest abschwächen. Darum werden ortsabhängige Reflektanzverläufe in den Reflektanzbildern R1 bis Rn verglichen und nur solche Reflektanzbilder R1 bis Rn bei der Berechnung des Ergebnisreflektanzbildes E berücksichtigt, deren ortsabhängigen Reflektanzverläufe sich bei der Addition sozusagen konstruktiv überlagern.

Anhand des in Figur 5 dargestellten Beispiels lässt sich dies anschaulich erklären. Bis auf das dritte Reflektanzbild R3 nimmt die Reflektanz bei allen anderen Reflektanzbildern R1, R2, R4 bis Rn vom Teilbereich 18 links neben der Kante 11 zum Teilbereich 18 rechts neben der Kante 11 zu, was durch die rechts hellere Färbung veranschaulicht ist. Demgegenüber nimmt die Reflektanz im dritten Reflektanzbild R3 von links nach rechts ab. Deswegen würde sich das dritte Reflektanzbild R3 mit den anderen Reflektanzbildern bei einer Addition sozusagen destruktiv überlagern. Aus diesem Grund bleibt das dritte Reflektanzbild im Beispiel unberücksichtigt für die Bestimmung des Ergebnisreflektanzbildes E und erhält einen dritten Wichtungsfaktor W3 = 0.

In den Figuren 6 und 7 ist beispielhaft dargestellt, dass auch sich sozusagen neutral verhaltende Reflektanzbilder Ri, Rj unberücksichtigt bleiben und daher einen Wichtungsfaktor von Wi, Wj von null zugeordnet bekommen. Unter neutralem Verhalten ist zu verstehen, dass sich die Reflektanz örtlich nicht oder nur unwesentlich ändert, so dass daraus kein Mehrwert für die Bestimmung der Kante 11 abgeleitet werden kann. Allerdings kann anhand solcher neutraler Reflektanzbilder abgeleitet werden, welche Lichtquelle 15 oder Gruppe von Lichtquellen 15 zu einem derart örtlich neutralen Reflektanzverlauf führt. Genau diese Lichtquelle 15 oder Gruppe von Lichtquellen 15 eignet sich zur Veränderung der Grundhelligkeit in der Messumgebung. Daher kann es zweckmäßig sein den aktuellen Beleuchtungszustand - der hier durch die aktuell zur Intensitätsänderung verwendete Lichtquelle 15 oder Gruppe von Lichtquellen 15 gekennzeichnet ist - als neutral für den aktuellen Objekttyp oder den aktuellen Objektoberflächenbereichstyp zu kennzeichnen und diese Kennzeichnung in einem Speicher der Steuereinrichtung 20 abzuspeichern. Für spätere Kantenmessungen bei gleichen Objekttypen oder Objektoberflächenbereichstypen kann auf diese Information zurückgegriffen werden.

In eine und/oder beide Richtungen der Bildebene kann der Gradient des Reflektanzverlaufs ortabhängig ermittelt und mit den anderen ortabhängigen Gradienten des Reflektanzverlaufs der anderen Reflektanzbilder verglichen werden. Liegt die Differenz zwischen ortabhängigen Gradienten verschiedener Reflektanzbilder R1 bis Rn in einem zulässigen Toleranzbereich, so können diese bei der Ermittlung des Ergebnisreflektanzbildes E berücksichtigt werden. Liegt der ortsabhängige Reflektanzverlauf in einem oder mehreren Parametern eines Reflektanzbildes R1 bis Rn außerhalb des Toleranzbereichs, so wird diesem Reflektanzbild R1 bis Rn ein Wichtungsfaktor W1 bis Wn von null zugeordnet, so dass es nicht in die Berechnung des Ergebnisreflektanzbildes E eingeht.

Die Wichtungsfaktoren W1 bis Wn werden vorzugsweise dem Typ des Objekts 9 oder dem Typ des Objektoberflächenbereichs 12 zugeordnet und abgespeichert. Werden bei zukünftigen Kantenmessungen Objekte 9 oder Objektoberflächenbereiche 12 gleichen Typs optisch angetastst, so kann auf die abgespeicherten Daten zurückgegriffen werden. Die Aufnahme von Sequenzen, die zu einem Reflektanzbild Ri (i=1 bis n) mit dem Wichtungsfaktor Wi = 0 (i=1 bis n) geführt hatten, können entfallen und Messzeit kann eingespart werden. Anhand der abgespeicherten Wichtungsfaktoren W1 bis Wn kann demnach im ersten Verfahrensschritt 30 entschieden werden, welche Beleuchtungszustände gewählt werden können und welche Sequenzen von Kamerabildern B aufgenommen werden sollen. Das Verfahren ist quasi lernend. Je mehr unterschiedliche Objekttypen oder Objektoberflächenbereichstypen bereits einmal einer Kantenmessung unterzogen wurden, desto mehr A-Priori-Wissen steht für zukünftige Kantenmessungen zur Verfügung. Anstelle der Wichtungsfaktoren W1 bis Wn können auch andere die Verwendbarkeit bestimmter Beleuchtungszustände charakterisierende Daten abgespeichert werden.

In einem fünften Verfahrensschritt 34 wird das Ergebnisreflektanzbild E ausgewertet. Hierfür dient beispielsweise ein Kantenortkriterium K, anhand dessen die Position bzw. der Verlauf der Kante 11 im Ergebnisreflektanzbild E ermittelt werden kann. Als Kantenortkriterium K wird vorzugsweise ein integrales Kantenortkriterium verwendet. Dabei wird das Integral des ortsabhängigen Reflektanzverlaufs im Ergebnisreflektanzbild E entlang von vorgebbaren Messlinien ermittelt und ausgewertet. Es versteht sich, dass alternativ oder zusätzlich auch andere Kantenortkriterien, wie etwa ein differenzielles Kantenortkriterium eingesetzt werden könnte.

Die Erfindung betrifft ein Verfahren zur Ermittlung der Lage einer Kante 11 in oder an einem interessierenden Objektoberflächenbereich 12 durch optisches Antasten. Hierfür wird die Reflektanz des Objektoberflächenbereichs 12 ausgewertet. Unter verschiedenen Beleuchtungszuständen, insbesondere unterschiedlichen Lichteinfallsrichtungen wird Licht auf den Objektoberflächenbereich 12 abgestrahlt und in jedem Beleuchtungszustand wird eine Sequenz S1 bis Sn von Kamerabildern B aufgenommen. Jedes Kamerabild B einer Sequenz S1 bis Sn wird bei einer anderen Beleuchtungsintensität I aufgenommen. Aus mehreren oder allen Kamerabildern B einer Sequenz S1 bis Sn wird anschließend jeweils ein Reflektanzbild R1 bis Rn erzeugt. Im Anschluss daran wird aus mehreren oder allen Reflektanzbildern R1 bis Rn durch gewichtete Addition ein Ergebnisreflektanzbild E erzeugt, in dem durch Anwenden wenigstens eines Kantenortkriteriums die Lage einer Kante 11 in oder am interessierenden Objektoberflächenbereich 12 subpixelgenau bestimmt wird.

### Bezugszeichenliste:

- 9: Objekt
- 10: Vorrichtung
- 11: Kante
- 12: Objektoberflächenbereich
- 13: Kamera
- 14: Beleuchtungseinrichtung
- 15: Lichtquelle
- 16: Objektiv
- 17: optische Achse
- 18: Teilfläche

- 20: Steuereinrichtung
- 21: Bildsegment

- 30: erster Verfahrensschritt
- 31: zweiter Verfahrensschritt
- 32: dritter Verfahrensschritt
- 33: vierter Verfahrensschritt
- 34: fünfter Verfahrensschritt

- A: Bereich
- B: Kamerabild
- E: Ergebnisreflektanzbild
- K: Kantenortkriterium
- L, L1, L2: Beleuchtungsrichtung
- P1 bis Pk: Pixel
- R1 bis Rn: Reflektanzbild
- S1: erste Sequenz
- S2 bis Sn: weitere Sequenzen
- V(I): intensitätsabhängiger Verlauf
- V1(I): intensitätsabhängiger erster Grauwertverlauf
- V2(I): intensitätsabhängiger zweiter Grauwertverlauf

## Patentansprüche

1. Verfahren zur optischen Ermittlung einer Kante (11) in oder an einem Objektoberflächenbereich (12) eines Objekts (9) mit folgenden Schritten:
Anstrahlen des Objektoberflächenbereichs (12) mit einer ersten Gruppe von Lichtquellen (15) oder aus einer ersten Beleuchtungsrichtung (L1) und Aufnehmen einer ersten Sequenz (S1) mit mehreren Kamerabildern (B) des Objektoberflächenbereichs (12) mit jeweils unterschiedlichen Beleuchtungsintensitäten (I),
Aufnehmen wenigstens einer weiteren Sequenz (S2 bis Sn) mit mehreren Kamerabildern (B) des Objektoberflächenbereichs (12) mit jeweils unterschiedlichen Beleuchtungsintensitäten (I), wobei der Objektoberflächenbereich (12) bei allen Sequenzen (S1 bis Sn) jeweils mit einer anderen Gruppe von Lichtquellen (15) oder jeweils aus einer anderen Beleuchtungsrichtung (L2) angestrahlt wird,
Bilden jeweils eines ortsaufgelösten Reflektanzbildes (R1 bis Rn) für jede der Sequenzen (S1 bis Sn) aus zumindest einigen der Kamerabilder (B) der jeweiligen Sequenz (S1 bis Sn), wobei für jedes Pixel ein Verlauf (V1 bis Vk) einer Lichtmengengröße (GW) abhängig von der Beleuchtungsintensität (I) bestimmt wird, wobei die Lichtmengengröße (GW) die von einer Kamera (13) empfangene Lichtmenge für das jeweils zugeordnete Pixel (P1 bis Pk) beschreibt und
Verwenden wenigstens eines der Reflektanzbilder (R1 bis Rn) zur Ermittlung von wenigstens einer Kante (11) im oder am Objektoberflächenbereich (12).

2. Verfahren nach Anspruch 1,
**dadurch gekennzeichnet, dass** nur die Werte der Lichtmengengröße (GW) zur Bildung des intensitätsabhängigen Verlaufs (V1 bis Vk) herangezogen werden, die zumindest ein vorgegebenes Auswahlkriterium erfüllen.

3. Verfahren nach Anspruch 2,
**dadurch gekennzeichnet, dass** als Auswahlkriterium eine oder mehrere der folgenden Kriterien verwendet werden:
- die Werte der Lichtmengengröße (GW) unterhalb eines Intensitätsminimalwertes (Iₘᵢₙ) für die Beleuchtungsintensität (I) entsprechen höchstens einem Lichtmengenminimalwert (Gₘᵢₙ),
- die Werte der Lichtmengengröße (GW) oberhalb eines Intensitätsmaximalwertes (Iₘₐₓ) für die Beleuchtungsintensität (I) entsprechen zumindest einem Lichtmengenmaximalwert (Gₘₐₓ),
- von einem Intensitätsminimalwert (Iₘᵢₙ) bis zu einem Intensitätsmaximalwert (Iₘₐₓ) für die Beleuchtungsintensität (I) nehmen die Werte der Lichtmengengröße (GW) zu.

4. Verfahren nach Anspruch 1,
**dadurch gekennzeichnet, dass** auf Basis von mindestens einem der Reflektanzbilder (R1 bis Rn) ein Ergebnisreflektanzbild (E) gebildet wird.

5. Verfahren nach Anspruch 4,
**dadurch gekennzeichnet, dass** das Ergebnisreflektanzbild (E) durch eine gewichtete Addition der Reflektanzen der örtlich übereinstimmenden Pixel (P) aus den Reflektanzbildern (R1 bis Rn) gebildet wird.

6. Verfahren nach Anspruch 5,
**dadurch gekennzeichnet, dass** für jedes Reflektanzbild (R1 bis Rn) ein Wichtungsfaktor (W1 bis Wn) von größer oder gleich null bestimmt wird, der sich aus einem Vergleich von örtlichen Reflektanzverläufen der Reflektanzbilder (R1 bis Rn) ergibt.

7. Verfahren nach Anspruch 5,
**dadurch gekennzeichnet, dass** zumindest ein Teil der ermittelten Wichtungsfaktoren (W1 bis Wn) dem Typ des aktuell vermessenen Objekts (9) oder des aktuell vermessenen Objektoberflächenbereichs (12) zugeordnet und abgespeichert wird.

8. Verfahren nach Anspruch 7,
**dadurch gekennzeichnet, dass** die abgespeicherten Wichtungsfaktoren (W1 bis Wn) bei nachfolgenden Bestimmungen der Lage einer Kante (11) bei einem Objekt (9) oder einem Objektoberflächenbereich (12) gleichen Typs berücksichtigt werden.

9. Verfahren nach Anspruch 7,
**dadurch gekennzeichnet, dass** bei der Ermittlung der Kante (11) zunächst überprüft wird, ob für den aktuell zu vermessenden Typ des Objekts (9) oder Objektoberflächenbereichs (12) ein Eintrag von Wichtungsfaktoren (W1 bis Wn) im Speicher existiert und wenn dies der Fall ist, die Auswahl der aufzunehmenden Sequenzen (S1 bis Sn) von Kamerabildern (B) abhängig von den gespeicherten Wichtungsfaktoren (W1 bis Wn) festgelegt wird.

10. Verfahren nach Anspruch 4,
**dadurch gekennzeichnet, dass** die Lage der wenigstens einer Kante (11) anhand des Ergebnisreflektanzbildes (E) ermittelt wird.

11. Verfahren nach Anspruch 1,
**dadurch gekennzeichnet, dass** beim Aufnehmen einer Sequenz (S1 bis Sn) die Relativposition zwischen einer Kamera (13) und dem Objektoberflächenbereich (12) unverändert bleibt.

12. Verfahren zur optischen Ermittlung einer Kante (11) in oder an einem Objektoberflächenbereich (12) eines Objekts (9) mit folgenden Schritten:
(a) Überprüfen, ob für den aktuell zu vermessenden Typ des Objekts (9) oder Objektoberflächenbereichs (12) ein Eintrag von Wichtungsfaktoren (W1 bis Wn) oder anderer die Verwendbarkeit bestimmter Beleuchtungszustände charakterisierender Daten in einem Speicher existiert,
(b) Ausführen des Verfahrens nach einem der vorhergehenden Ansprüche, wenn im Schritt (a) kein Eintrag im Speicher gefunden wurde,
(c) Ausführen der nachfolgenden Verfahrensschritte, wenn im Speicher ein Eintrag gefunden wurde:
(c1) Auswählen wenigstens einer aufzunehmenden Sequenz (Si) von Kamerabildern (B) abhängig von den gespeicherten Wichtungsfaktoren (W1 bis Wn) oder von den anderen die Verwendbarkeit bestimmter Beleuchtungszustände charakterisierender Daten,
(c2) Anstrahlen des Objektoberflächenbereichs (12) in einem der jeweils aufzunehmenden Sequenz (Si) zugeordneten Beleuchtungszustand und Aufnehmen der wenigstens einen ausgewählten Sequenz (Si) mit jeweils mehreren Kamerabildern (B) des Objektoberflächenbereichs (12) mit jeweils unterschiedlichen Beleuchtungsintensitäten (I),
(c3) Bilden jeweils eines ortsaufgelösten Reflektanzbildes (Ri) für jede der ausgewählten und aufgenommenen Sequenzen (Si) aus zumindest einigen der Kamerabilder (B) der jeweiligen Sequenz (Si), wobei für jedes Pixel ein Verlauf (V1 bis Vk) einer Lichtmengengröße (GW) abhängig von der Beleuchtungsintensität (I) bestimmt wird, wobei die Lichtmengengröße (GW) die von einer Kamera (13) empfangene Lichtmenge für das jeweils zugeordnete Pixel (P1 bis Pk) beschreibt,
(c4) Verwenden wenigstens eines der Reflektanzbilder (Ri) zur Ermittlung von wenigstens einer Kante (11) im oder am Objektoberflächenbereich (12).

## Claims

1. Method for the optical detection of an edge (11) in or on an object surface region (12) of an object (9) with the following steps:
illuminating the object surface region (12) with a first group of light sources (15) or from a first illumination direction (L1) and recording a first sequence (S1) with multiple camera images (B) of the object surface region (12) with respectively different illumination intensities (I),
recording at least one further sequence (S2 to Sn) with multiple camera images (B) of the object surface region (12) with respectively different illumination intensities (I),
wherein in the case of all sequences (S1 to Sn) the object surface region (12) is respectively illuminated with another group of light sources (15) or respectively from another illumination direction (L2),
respectively forming a locally resolved reflectance image (R1 to Rn) for each of the sequences (S1 to Sn) from at least some of the camera images (B) of the respective sequence (S1 to Sn), wherein for each pixel a curve (V1 to Vk) of a light quantity magnitude (GW) is determined in dependence on the illumination intensity (I),
wherein the light quantity magnitude (GW) describes the light quantity received by a camera (13) for the respectively associated pixel (P1 to Pk), and
using at least one of the reflectance images (R1 to Rn) to detect at least one edge (11) in or on the object surface region (12).

2. Method according to claim 1, **characterised in that** only the values of the light quantity magnitude (GW), which meet at least one selection criterion, are employed to form the intensity-dependent curve (V1 to Vk).

3. Method according to claim 2, **characterised in that** one or more of the following criteria are used as selection criterion:
• the values of the light quantity magnitude (GW) below an intensity minimum value (Iₘᵢₙ) for the illumination intensity (I) correspond at most to a light quantity minimum value (Gₘᵢₙ),
• the values of the light quantity magnitude (GW) above an intensity maximum value (Iₘₐₓ) correspond at least to a light quantity maximum value (Gₘₐₓ),
• the values of the light quantity magnitude (GW) increase from an intensity minimum value (Iₘᵢₙ) to an intensity maximum value (Iₘₐₓ) for the illumination intensity (I).

4. Method according to claim 1, **characterised in that** a result reflectance image (E) is formed on the basis of at least one of the reflectance images (R1 to Rn).

5. Method according to claim 4, **characterised in that** the result reflectance image (E) is formed by a weighted addition of the reflectances of the locally consistent pixels (P) from the reflectance images (R1 to Rn).

6. Method according to claim 5, **characterised in that** a weighting factor (W1 to Wn) of larger than or equal to zero, which results from a comparison of local reflectance curves of the reflectance images (R1 to Rn), is determined for each reflectance image (R1 to Rn).

7. Method according to claim 5, **characterised in that** at least a part of the determined weighting factors (W1 to Wn) is assigned to the type of the currently measured object (9) or the currently measured object surface region (12) and stored.

8. Method according to claim 7, **characterised in that** the stored weighting factors (W1 to Wn) are taken into consideration in subsequent determinations of the position of an edge (11) in the case of an object (9) or an object surface region (12) of the same type.

9. Method according to claim 7, **characterised in that** in the detection of the edge (11) it is firstly checked whether an entry of weighting factors (W1 to Wn) exists in the memory for the type of object (9) or object surface region (12) to be currently measured, and if this is the case, the selection of the sequences (S1 to Sn) to be recorded from camera images (B) is defined in dependence on the stored weighting factors (W1 to Wn).

10. Method according to claim 4, **characterised in that** the position of the at least one edge (11) is determined on the basis of the result reflectance image (E).

11. Method according to claim 1, **characterised in that** the relative position between a camera (13) and the object surface region (12) remains unchanged during the recording of a sequence (S1 to Sn).

12. Method for the optical detection of an edge (11) in or on an object surface region (12) of an object (9) with the following steps:
(a) checking whether an entry of weighting factors (W1 to Wn) or other data characterising the usability of specific illumination states exists in a memory for the type of object (9) or object surface region (12) to be currently measured,
(b) conducting the method according to one of the preceding claims if no entry was found in the memory in step (a),
(c) conducting the following method steps if an entry was found in the memory:
(c1) selecting at least one sequence (Si) to be recorded from camera images (B) in dependence on the stored weighting factors (W1 to Wn) or other data characterising the usability of specific illumination states,
(c2) illuminating the object surface region (12) in an illumination state associated with the sequence (Si) to be respectively recorded and recording the at least one selected sequence (Si) respectively with multiple camera images (B) of the object surface region (12) with respectively different illumination intensities (I),
(c3) respectively forming a locally resolved reflectance image (Ri) for each of the selected and recorded sequences (Si) from at least some of the camera images (B) of the respective sequence (Si), wherein a curve (V1 to Vk) of a light quantity magnitude (GW) is determined in dependence on the illumination intensity (I) for each pixel, wherein the light quantity magnitude (GW) describes the light quantity received by a camera (13) for the respectively associated pixel (P1 to Pk),
(c4) using at least one of the reflectance images (Ri) to detect at least one edge (11) in or on the object surface region (12).

## Revendications

1. Procédé de détermination optique d'un bord (11) dans ou sur une zone de surface d'objet (12) d'un objet (9), comprenant les étapes suivantes :
irradiation de la zone de surface d'objet (12) avec un premier groupe de sources lumineuses (15) ou depuis une première direction d'illumination (L1) et enregistrement d'une première séquence (S1) avec plusieurs images de caméra (B) de la zone de surface d'objet (12) avec des intensités d'illumination (I) respectives différentes,
enregistrement d'au moins une séquence supplémentaire (S2 à Sn) avec plusieurs images de caméra (B) de la zone de surface d'objet (12) avec des intensités d'illumination (I) respectives différentes, la zone de surface d'objet (12) étant irradiée pour toutes les séquences (S1 à Sn) respectivement avec un autre groupe de sources lumineuses (15) ou respectivement depuis une autre direction d'illumination (L2),
formation respectivement d'une image de réflectance (R1 à Rn) à résolution locale pour chacune des séquences (S1 à Sn) à partir d'au moins quelques-unes des images de caméra (B) de la séquence respective (S1 à Sn), sachant que l'on détermine pour chaque pixel une évolution (V1 à Vk) d'une grandeur de quantité de lumière (GW) en fonction de l'intensité d'illumination (I), la grandeur de quantité de lumière (GW) décrivant la quantité de lumière reçue par une caméra (13) pour le pixel (P1 à Pk) respectif associé, et
utilisation d'au moins une des images de réflectance (R1 à Rn) pour déterminer au moins un bord (11) dans ou sur la zone de surface d'objet (12).

2. Procédé selon la revendication 1, **caractérisé en ce que** seules sont utilisées pour la formation de l'évolution (V1 à Vk) dépendant de l'intensité, les valeurs de la grandeur de quantité de lumière (GW) qui répondent à au moins un critère de sélection prédéterminé.

3. Procédé selon la revendication 1, **caractérisé en ce que** l'on utilise comme critère de sélection un ou plusieurs des critères suivants :
- les valeurs de la grandeur de quantité de lumière (GW) inférieures à une valeur minimale d'intensité (Iₘᵢₙ) pour l'intensité d'illumination (I) correspondent au maximum à une valeur minimale de quantité de lumière (Gₘᵢₙ),
- les valeurs de la grandeur de quantité de lumière (GW) supérieures à une valeur maximale d'intensité (Iₘₐₓ) pour l'intensité d'illumination (I) correspondent au moins à une valeur maximale de quantité de lumière (Gₘₐₓ),
- à partir d'une valeur minimale d'intensité (Iₘᵢₙ) jusqu'à une valeur maximale d'intensité (Iₘₐₓ) pour l'intensité d'illumination (I), les valeurs de la grandeur de quantité de lumière (GW) augmentent.

4. Procédé selon la revendication 1, **caractérisé en ce que** sur la base d'au moins une des images de réflectance (R1 à Rn), on forme une image de réflectance résultante (E).

5. Procédé selon la revendication 4, **caractérisé en ce que** l'image de réflectance résultante (E) est formée par addition pondérée des réflectances des pixels (P) à concordance locale provenant des images de réflectance (R1 à Rn).

6. Procédé selon la revendication 5, **caractérisé en ce que** l'on détermine pour chaque image de réflectance (R1 à Rn) un coefficient de pondération (W1 à Wn) supérieur ou égal à zéro, qui est le résultat d'une comparaison d'évolutions de réflectance locales des images de réflectance (R1 à Rn).

7. Procédé selon la revendication 5, **caractérisé en ce qu'**au moins une partie des coefficients de pondération (W1 à Wn) déterminés est associée au type de l'objet (9) actuellement mesuré ou de la zone de surface d'objet (12) actuellement mesurée, et est sauvegardée.

8. Procédé selon la revendication 7, **caractérisé en ce que** les coefficients de pondération (W1 à Wn) sauvegardés sont pris en compte lors de déterminations ultérieures de la position d'un bord (11) pour un objet (9) ou une zone de surface d'objet (12) du même type.

9. Procédé selon la revendication 7, **caractérisé en ce que** lors de la détermination du bord (11), on vérifie tout d'abord s'il existe, pour le type d'objet (9) ou de zone de surface d'objet (12) actuellement à mesurer, une sauvegarde de coefficients de pondération (W1 à Wn) dans la mémoire, et si cela est le cas, on définit la sélection des séquences (S1 à Sn) d'images de caméra (B) à enregistrer, en fonction des coefficients de pondération (W1 à Wn) sauvegardés.

10. Procédé selon la revendication 4, **caractérisé en ce que** la position du bord (11), au nombre d'au moins un, est déterminée à l'aide de l'image de réflectance résultante (E).

11. Procédé selon la revendication 1, **caractérisé en ce que** lors de l'enregistrement d'une séquence (S1 à Sn), la position relative entre une caméra (13) et la zone de surface d'objet (12) reste inchangée.

12. Procédé de détermination optique d'un bord (11) dans ou sur une zone de surface d'objet (12) d'un objet (9), comprenant les étapes suivantes :
(a) vérification pour déterminer s'il existe, pour le type d'objet (9) ou de zone de surface d'objet (12) actuellement à mesurer, une sauvegarde de coefficients de pondération (W1 à Wn), ou d'autres données caractérisant la possibilité d'utiliser des états d'illumination précis, dans une mémoire,
(b) mise en oeuvre du procédé selon l'une des revendications précédentes, si aucune sauvegarde n'a été trouvée dans la mémoire au cours de l'étape (a),
(c) exécution des étapes de procédé suivantes, si une inscription a été trouvée dans la mémoire :
(c1) sélection d'au moins une séquence (Si) d'images de caméra (B) à enregistrer, en fonction des coefficients de pondération (W1 à Wn) sauvegardés ou en fonction des autres données caractérisant la possibilité d'utiliser des états d'illumination précis,
(c2) irradiation de la zone de surface d'objet (12) dans un état d'illumination associé à la séquence (Si) respective à enregistrer, et enregistrement de la séquence (Si) sélectionnée, au nombre d'au moins une, avec respectivement plusieurs images de caméra (B) de la zone de surface d'objet (12) avec chaque fois des intensités d'illumination (I) différentes,
(c3) formation respectivement d'une image de réflectance (Ri) à résolution locale pour chacune des séquences (Si) sélectionnées et enregistrées à partir d'au moins quelques-unes des images de caméra (B) de la séquence (Si) respective, sachant que pour chaque pixel on détermine une évolution (V1 à Vk) d'une grandeur de quantité de lumière (GW) en fonction de l'intensité d'illumination (I), la grandeur de quantité de lumière (GW) décrivant la quantité de lumière reçue par une caméra (13) pour le pixel (P1 à Pk) respectivement associé,
(c4) utilisation d'au moins une des images de réflectance (Ri) pour déterminer au moins un bord (11) dans ou sur une zone de surface d'objet (12).
